# EUROPÄISCHE PATENTSCHRIFT

(11) **EP 1 649 202 B1**
(45) Veröffentlichungstag und Bekanntmachung des Hinweises auf die Patenterteilung: **19.09.2007**
(21) Anmeldenummer: 04763302.9
(22) Anmeldetag: 16.07.2004
(51) Int. Cl.: F16K 17/10, G21C 9/004

(54) **DRUCKENTLASTUNGSEINRICHTUNG ZUM EINSATZ AN DRUCKHALTERSYSTEMEN VON KRAFTWERKEN**
PRESSURE RELEASE DEVICE FOR APPLICATION IN PRESSURISED SYSTEMS IN POWER STATIONS
DISPOSITIF DE DECOMPRESSION DESTINE A DES SYSTEMES DE MAINTIEN DE PRESSION DE CENTRALES ELECTRIQUES

(30) Priorität: 23.07.2003 DE 10333339
(43) Veröffentlichungstag der Anmeldung: 26.04.2006
(73) Patentinhaber: AREVA NP GmbH, 91058 Erlangen (DE)
(72) Erfinder: CONRADS, Hermann-Josef, 91074 Herzogenaurach (DE); ERWIN, Laurer, 91096 Möhrendorf (DE)
(74) Vertreter: Walkenhorst, Andreas
(86) Internationale Anmeldenummer: PCT/EP2004/007984
(87) Internationale Veröffentlichungsnummer: WO 2005/008111

(56) Entgegenhaltungen:
- DE-A- 19 532 928
- GB-A- 299 548
- US-A- 4 245 412
- US-A- 4 607 822
- US-A- 6 011 826

## Beschreibung

Die Erfindung betrifft eine Druckentlastungseinrichtung zum Einsatz an Druckhaltersystemen von Kraftwerken, insbesondere Kernkraftwerken.

In einem Kraftwerk, insbesondere Kernkraftwerk, ist zur Regelung des Reaktor-Kühlmitteldrucks in der Regel ein Druckhaltersystem vorgesehen, das einen Behälter zur Aufnahme des Kühlmittels aufweist und der Einhaltung eines Mindestarbeitsdrucks im Primärkreislauf des Kraftwerks dient. Ein solches Druckhaltersystem ist insbesondere notwendig, da Kühlmittel im unterkühlten Zustand umgepumpt wird.

Das Druckhaltersystem weist aus Sicherheitsgründen eine Überdruckabsicherungsvorrichtung mit mindestens einem Sicherheitsventil auf. Eine beispielsweise aus der DE 195 32 928 C2 bekannte Sicherheitsventilanordnung zum Einsatz an einem Druckhaltersystem eines Kraftwerks umfasst hintereinander geschaltete Sicherheitsventile, welche in einem gemeinsamen Sicherheitsventilgehäuse angeordnet sind, das zugleich als Träger für daran angeflanschte weitere Ventilgehäuse, nämlich u.a. ein Umschaltventilgehäuse sowie mehrere Steuerventilgehäuse, dient. In der bekannten Sicherheitsventilanordnung sind sowohl Tandemventile als auch Einzelventilanordnungen verwendbar. In jedem Fall können einem Sicherheitsventil mittels Umschaltventilen wahlweise verschiedene Steuerventile zugeordnet werden.

Der Erfindung liegt die Aufgabe zugrunde, eine Druckentlastungseinrichtung so zu konzipieren und an einem Druckhaltersystem eines Kraftwerks zum Einsatz zu bringen, dass bei einfachem und Gewicht sparendem Aufbau zugleich eine besonders weitreichende Fehlerbeherrschung möglich ist.

Diese Aufgabe wird erfindungsgemäß gelöst durch eine Druckentlastungseinrichtung mit den Merkmalen des Anspruchs 1. Hierbei sind in einem Ventilgehäuse zwei parallel geschaltete Hauptventil-Einsätze angeordnet, zu deren Betätigung jeweils zwei Steuerventile vorgesehen sind. Ein bei der Betätigung eines Hauptventil-Einsatzes auftretender Einzelfehler ist durch die Parallelschaltung der Hauptventil-Einsätze beherrscht. Im Bereich der Steuerventile sind Einzelfehler dadurch beherrscht, dass jedem Hauptventil-Einsatz zwei Steuerventile zugeordnet sind. Ein besonders kompakter und Gewicht sparender Aufbau der Druckentlastungseinrichtung ist durch die Anordnung beider Hauptventil-Einsätze in einem gemeinsamen auch als Hauptventilgehäuse bezeichneten Ventilgehäuse gegeben. Die, Anordnung der im Vergleich zum das Ventilgehäuse und die Hauptventil-Einsätze umfassenden Hauptventil relativ kleinen und leichten Steuerventile ist hingegen hinsichtlich der Masse der gesamten Druckentlastungseinrichtung von untergeordneter Bedeutung. Ein besonders kompakter Aufbau der gesamten Druckentlastungseinrichtung ist nach einer bevorzugten Ausgestaltung dadurch erreicht, dass die den Hauptventil-Einsätzen zugeordneten Steuerventile jeweils in einem mit dem Ventilgehäuse-verbundenen Steuerventilgehäuse oder Steuerventilblock angeordnet sind. Dabei kann das Steuerventilgehäuse beispielsweise an das Ventilgehäuse angeflanscht oder einstückig mit diesem ausgebildet sein.

Die zwei einem Hauptventil-Einsatz zugeordneten Steuerventile sind beispielsweise parallel geschaltet, d.h. in logischer Oder-Verknüpfung angeordnet, oder in Reihe geschaltet, d.h. in logischer Und-Verknüpfung angeordnet. Bevorzugt ist eine Reihenschaltung der Steuerventile, da in diesem Fall ein unbeabsichtigtes Ausösen eines Hauptventil-Einsatzes durch Öffnung eines Steuerventils ausgeschlossen ist. Nach einer weiteren Alternative sind, in prinzipiell aus der DE 195 32 928 C2 bekannter Weise, Umschaltvorrichtungen zur wahlweisen Aktivierung eines einzelnen Steuerventils vorgesehen.

Zur direkten Betätigung der mittels der Steuerventile angesteuerten Hauptventil-Einsätze ist vorzugsweise das Medium des Druckhaltersystems vorgesehen. Hierbei wird zum Öffnen des Hauptventil-Einsatzes der Druck des Mediums auf einen mit dem Hauptventil-Einsatz verbundenen Kolben entweder erhöht oder reduziert. Vorzugsweise ist eine Druckreduzierung am Kolben zum Öffnen des Hauptventil-Einsatzes, d.h. eine Betätigung nach dem Entlastungsprinzip, vorgesehen. Dies hat den Vorteil, dass bereits nach kurzer Betätigungszeit des Steuerventils eine derart große Druckänderung am Kolben eingestellt ist, dass das Hauptventil eigenmediumbetätigt vollständig öffnet.

Nach einer bevorzugten Weiterbildung ist jedem Hauptventil-Einsatz eine Anfahrüberbrückung zugeordnet, welche eine zuverlässige Geschlossenhaltung der Hauptventil-Einsätze auch bei noch nicht vollständig aufgebautem Druck im Druckhaltersystem ermöglicht. Die Anfahrüberbrückung weist bevorzugt eine mit einem Ventilkegel des Hauptventil-Einsatzes gekoppelte Spindel auf, welche auf der Auslassseite des Hauptventil-Einsatzes und damit auf der dem Kolben gegenüberliegenden Seite des Hauptventil-Einsatzes angeordnet ist. Hiermit ist auf einfache Weise eine direkte lineare Betätigung des Ventilkegels zumindest jeweils in einer Richtung entweder durch den mittels der Steuerventile angesteuerten Kolben oder durch die Spindel der Anfahrüberbrückung möglich. Die Anfahrüberbrückung ist verstellbar zwischen zwei Endpositionen, wobei in der ersten Endposition eine Betätigung des Hauptventil-Einsatzes über dessen gesamten Hub freigegeben ist und in einer zweiten Endpositon der Hauptventil-Einsatz in Geschlossen-Stellung blockiert ist. Vorzugsweise ist eine Dichtvorrichtung zwischen der Spindel der Anfahrüberbrückung und dem Ventilgehäuse oder einem starr mit diesem verbundenen Gehäuseteil vorgesehen, die die Spindel zum Ventilgehäuse abdichtet, sofern sich die Anfahrüberbrückung in erstgenannter Position, d.h. in der die Betätigung des Hauptventil-Einsatzes freigebenden Position befindet. Diese erste Dichtvorrichtung ist damit wirksam, solange die Anfahrüberbrückung, welche ebenso auch als Abfahrüberbrückung dient, nicht aktiviert ist. Darüber hinaus ist bevorzugt eine zweite, der ersten Dichtvorrichtung nachgeschaltete Dichtvorrichtung vorgesehen, welche die Spindel der Anfahrüberbrückung unabhängig von deren Position zum Ventilgehäuse hin abdichtet. Diese zweite Dichtvorrichtung ist beispielsweise als Stopfbuchsdichtung oder Faltenbalgdichtung ausgeführt. Zwischen der ersten, nur in einer einzigen definierten Position der Spindel wirksamen Dichtvorrichtung und der nachgeschalteten zweiten Dichtvorrichtung ist ein Raum gebildet, welcher vorzugsweise mit einem Niederdrucksystem verbunden ist. Eine Abdichtung ist lediglich gegen den Abblasedruck, also den Druck in Strömungsrichtung hinter dem Hauptventil-Einsatz, erforderlich.

Um bei der Betätigung der Anfahrüberbrückung die Spindel ausschließlich linear zu betätigen, weist diese vorzugsweise eine Verdrehsicherung auf. Des Weiteren ist die Anfahrüberbrückung bevorzugt mit einer Positionsanzeige ausgerüstet. In vorteilhafter Weise bilden Teile der Positionsanzeige zugleich Teile der Verdrehsicherung. In einfacher Ausgestaltung umfasst die Positionsanzeige lediglich zwei Endschalter, welche den beiden beschriebenen Endpositionen der Anfahrüberbrückung zugeordnet sind.

Die Anfahrüberbrückungen weisen vorzugsweise jeweils einen Antrieb auf, dessen Aufbau dem Aufbau der Antriebe der Steuerventile zumindest weitgehend entspricht. Als Antriebe kommen hierbei insbesondere elektromechanische Antriebe in Betracht. Abweichend hiervon werden nach einer alternativen Ausgestaltung anstelle von motorgetriebenen Stellventilen temperaturgesteuerte Pilotventile verwendet, welche sich durch einen ausgeprägten passiven Charakter auszeichnen.

Die Hauptventil-Einsätze innerhalb des Ventilgehäuses sind in Raum sparender Weise bevorzugt zumindest annähernd parallel zueinander angeordnet, d.h. weisen die gleiche Betätigungsrichtung auf. Insbesondere in dieser Bauform wird durch die Hauptventil-Einsätze ein gemeinsamer Einströmraum für das aus dem Druckhalter abzuführende Medium von einem ebenfalls gemeinsamen Ausströmraum getrennt. Die Einströmrichtung des in das Ventilgehäuse einströmenden Mediums entspricht vorzugsweise zumindest annähernd der Ausströmrichtung des aus dem Ventilgehäuse ausströmenden Mediums.

Der Hauptventil-Einsatz ist vorzugsweise rückdichtend ausgebildet, d.h. der Ventilkegel bzw. ein den Ventilkegel tragendes Bauteil bildet bei vollständiger Offen-Stellung eine Abdichtung zum Ventilgehäuse hin. Dies hat zusätzlich den Vorteil, dass bei vollständig geöffnetem Hauptventil-Einsatz der Ventilkegel durch den Druck des abzuführenden Mediums nicht mehr oder nur noch in eingeschränktem Maße eine Kraft in Richtung der Geschlossen-Stellung erfährt. Selbst bei einem störfallbedingten Ausfall sämtlicher Steuerventile ist somit ein selbsttätiges Schließen des Hauptventil-Einsatzes nach dem Ansprechen der Druckentlastungseinrichtung ausgeschlossen.

Der Ventilkegel des Hauptventil-Einsatzes ist betriebsbedingt hohen Kräften ausgesetzt und sollte auch zumindest geringfügige Verformungen aufnehmen. Dies ist in besonders hohem Maße dadurch erreicht, dass der Ventilkegel des Hauptventil-Einsatzes in einer ringförmigen Öffnung eine entsprechend geformte Lamelle, vorzugsweise mehrere konzentrisch angeordnete Lamellen aufnimmt. Die Lamellen sind dabei vorteilhafterweise in den Ventilkegel eingeschrumpft.

Eine Beschädigung der Hauptventil-Einsätze vor dem Öffnen oder während des Öffnungsvorgangs durch heißes abzuführendes Medium ist nach einer bevorzugten Weiterbildung dadurch sicher verhindert, dass den Hauptventil-Einsätzen eine Wasservorlage vorgeschaltet ist. Nach Abschluss des Öffnungsvorgangs des Hauptventil-Einsatzes ist die Beibehaltung dessen Offen-Stellung auch bei einer etwaigen Beschädigung durch ausströmendes Medium sichergestellt.

Der Vorteil der Erfindung liegt insbesondere darin, dass durch die Kombination von zwei in einem einzigen Ventilgehäuse angeordneten Hauptventil-Einsätzen einer Druckentlastungseinrichtung mit insgesamt vier Steuerventilen, welche vorzugsweise am selben Ventilgehäuse angeflanscht sind, die Funktionsfähigkeit der insgesamt kompakt aufgebauten Druckentlastungseinrichtung sowohl bei einem Einzelfehler eines Hauptventil-Einsatzes als auch bei einem Einzelfehler eines Steuerventils gegeben ist.

Nachfolgend wird ein Ausführungsbeispiel der Erfindung anhand einer Zeichnung näher erläutert. Hierin zeigen:
- FIG 1a bis 1c: in verschiedenen Schnitten und einer Ansicht ausschnittsweise eine Druckentlastungseinrichtung mit zwei Hauptventil-Einsätzen,
- FIG 2a bis 2c: in verschiedenen Schnitten eine Anfahrüberbrückung der Druckentlastungseinrichtung,
- FIG 3: eine Seitenansicht der Druckentlastungseinrichtung,
- FIG 4: eine Draufsicht der Druckentlastungseinrichtung,
- FIG 5a bis 5c: in Schnittdarstellungen verschiedene Betriebszustände der Druckentlastungseinrichtung, und
- FIG 6: einen Druckhalter mit Druckentlastungseinrichtung.

Einander entsprechende Teile sind in allen Figuren mit den gleichen Bezugszeichen versehen.

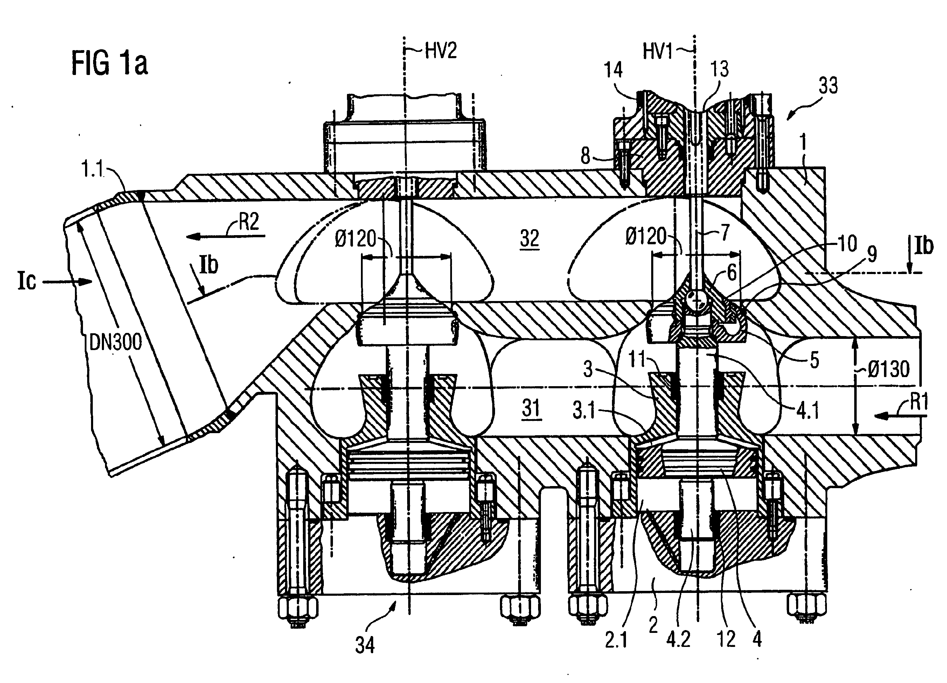

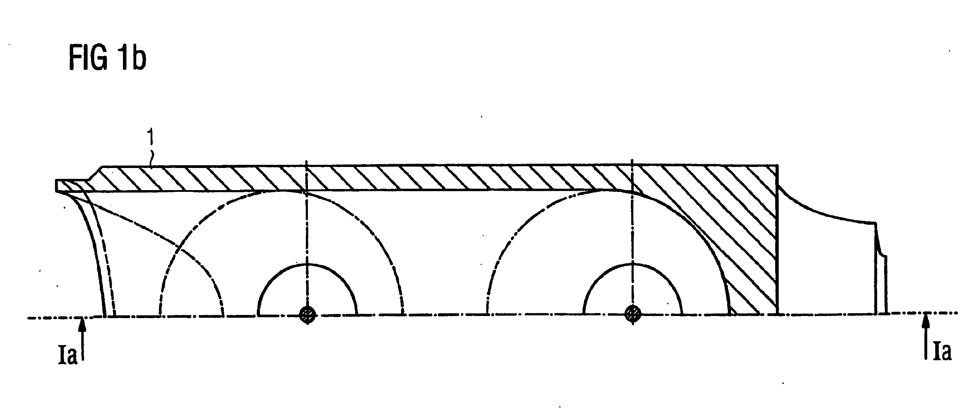

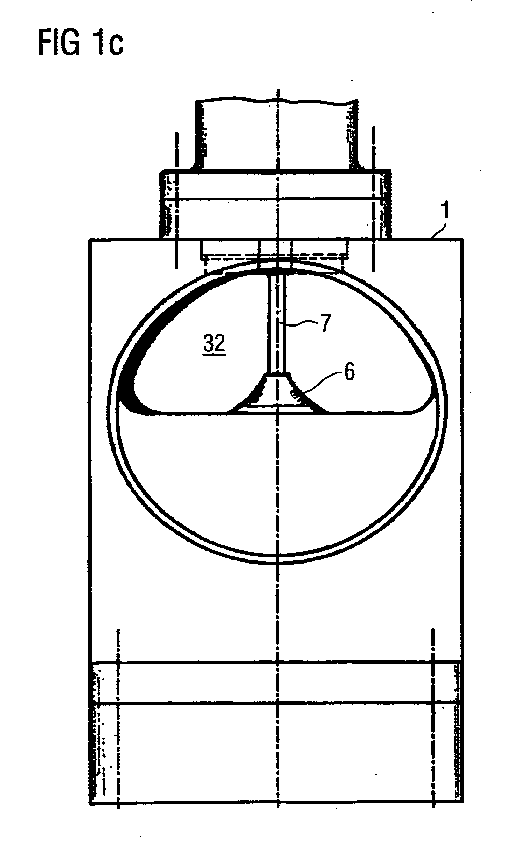

Eine in FIG 1 ausschnittsweise dargestellte Druckentlastungseinrichtung eines Druckhaltersystems eines Kernkraftwerks umfasst ein Ventilgehäuse 1, welches aus einem rostfreien Schmiedeblock herausgearbeitet ist. Die Einströmrichtung des aus dem Druckhaltersystem in das Ventilgehäuse 1 einströmenden Mediums ist mit R1, die Ausströmrichtung mit R2 bezeichnet. In Ausströmrichtung R2 ist an das Ventilgehäuse 1 ein Vorschuhende 1.1 mit Nennweite DN 300 angeschweißt (in FIG 1 c nicht dargestellt). Alternativ könnte an dieser Stelle auch eine Flanschverbindung vorgesehen sein. Entsprechendes gilt für den Eintrittsstutzen, welcher eine Nennweite DN 130 aufweist. An den Eintrittsstutzen schließt sich im Ventilgehäuse 1 ein Einströmraum 31 an, während der Austrittsstutzen mit einem Ausströmraum 32 verbunden ist. Ein- und Ausströmraum 31,32 sind etwa parallel zueinander im Ventilgehäuse 1 angeordnet.

Senkrecht zur Erstreckung des Ein- und Ausströmraumes 31,32, welche in etwa der Einströmrichtung R1 sowie der Ausströmrichtung R2 entspricht, sind ein erster Hauptventil-Einsatz 33 und ein zweiter Hauptventil-Einsatz 34 angeordnet. Die Hauptventil-Einsätze 33,34 sind hierbei derart parallel im Ventilgehäuse 1 angeordnet, dass ein Strömungsweg vom Einströmraum 31 über einen der Hauptventil-Einsätze 33,34 zum Ausströmraum 32 etwa eine Z-Form hat. Die Hauptventil-Einsätze 33,34 sind nicht nur im geometrischen Sinne sondern auch im strömungstechnischen Sinne parallel geschaltet, d.h. bei Öffnung eines oder beider der Hauptventil-Einsätze 33,34 ist der Strömungsweg vom Einströmraum 31 zum Ausströmraum 32 geöffnet. Zum Betätigen der dargestellten Druckentlastungseinrichtung ist das Öffnen lediglich eines der redundant vorhandenen Hauptventil-Eirisätze 33,34 vorgesehen.

Wären im Gegensatz hierzu zwei Druckentlastungsventile in Reihe geschaltet, so wäre ein Einzelfehler, nämlich das Nichtansprechen eines der Druckentlastungsventile im Anforderungsfall, nicht beherrscht. Um dies auszugleichen müssten daher zwei Anordnungen aus jeweils zwei in Reihe geschalteten Druckentlastungsventilen parallel geschaltet werden. Im Vergleich zu einer solchen mit herkömmlichen Druckentlastungsventilen aufgebauten Anordnung spart somit die erfindungsgemäße Druckentlastungseinrichtung dank der parallelen Anordnung zweier Hauptventil-Einsätze 33,34 in einem gemeinsamen Ventilgehäuse 1 zwei einzelne Druckentlastungsventile ein. Darüber hinaus bilden die im Ventilgehäuse 1 zusammengefassten Hauptventil-Einsätze 33,34 eine Druckentlastungsventilanordnung, welche leichter und kompakter aufgebaut ist als zwei in Reihe geschaltete Druckentlastungsventile.

Die Hauptventil-Einsätze 33,34 sind mit jeweils einem Gehäusedeckel 2, welcher - in der Darstellung auf der Unterseite - auf das Ventilgehäuse 1 aufgeschraubt ist, verschlossen. Vor dem Einbau der Hauptventil-Einsätze 33,34 in das Ventilgehäuse 1 werden zunächst die nachstehend noch näher beschriebenen Teile der Hauptventil-Einsätze 33,34 vormontiert. Die nachfolgende Beschreibung bezieht sich beispielhaft auf einen der Hauptventil-Einsätze 33,34, wobei beide Hauptventil-Einsätze 33,34 den gleichen Aufbau aufweisen.

Der Hauptventil-Einsatz 33 weist einen in nachstehend noch näher erläuterter Weise durch das Medium des Druckhalters betätigbaren Kolben 4 auf, an welchen sich, dem Einströmraum 31 zugewandt, eine obere Kolbenstange 4.1 und, dem Gehäusedeckel 2 zugewandt, eine untere Kolbenstange 4.2 anschließt. Die obere Kolbenstange 4.1 ist in einer in einem auch als Führungseinsatz bezeichneten Zylinder 3 gehaltenen oberen Führungsbuchse 11 geführt, während die untere Kolbenstange 4.2 in einer im Gehäusedeckel 2 gehaltenen unteren Führungsbuchse 12 geführt ist. Der symmetrisch zu einer ersten Hauptventilachse HV1 angeordnete Kolben 4 schließt zwischen diesem und dem Gehäusedeckel 2 einen unteren Kolbenraum 2.1 ein.

Dieser Kolbenraum 2.1 sowie der gesamte Einströmraum 31 einschließlich des Ringraums 3.1 über dem Kolben 4 ist bei bestimmungsgemäßem Betrieb des Druckhalters, d.h. bei geschlossenem Hauptventil-Einsatz 33 mit dem Druck des Mediums im Druckhalter beaufschlagt, während der Ausströmraum 32 drucklos ist. Hierdurch wird ein mit der oberen Kolbenstange 4.1 verschraubter Ventilkegel 5 gegen einen Ventilsitz 9 gedrückt. In den Ventilkegel 5 sind mehrere konzentrisch angeordnete ringförmige Lamellen 10 eingeschrumpft. An die Lamellen 10 schließt eine Strömungsspitze 6 an, welche eine kugelige Verdickung einer den Ausströmraum 32 durchquerenden Ventilstange 7 gelenkig umfasst. Durch den Einsatz mehrerer Lamellen 10 in den Ventilkegel 5 sowie die zumindest geringfügig gelenkige Lagerung der Ventilstange 7 in der Strömungsspitze 6 ist insgesamt eine hohe Flexibilität des Ventilkegels 5 und eine hohe Anpassungsfähigkeit an den unter hohen, auch thermischen Belastungen gegebenenfalls deformierten Ventilsitz 9 erreicht. Die Sitzdichtheit des aus den genannten Teilen gebildeten Ventileinsatzes ist damit unter allen Betriebsbedingungen gegeben, wobei eine Erhöhung der Flexibilität des Ventilkegels 5 durch eine Erhöhung der Anzahl der Lamellen 10 erreichbar ist. Durch die gegenseitige Abstützung der Lamellen 10 treten auch bei hohen hydraulischen Kräften keine mechanischen Überbeanspruchungen auf.

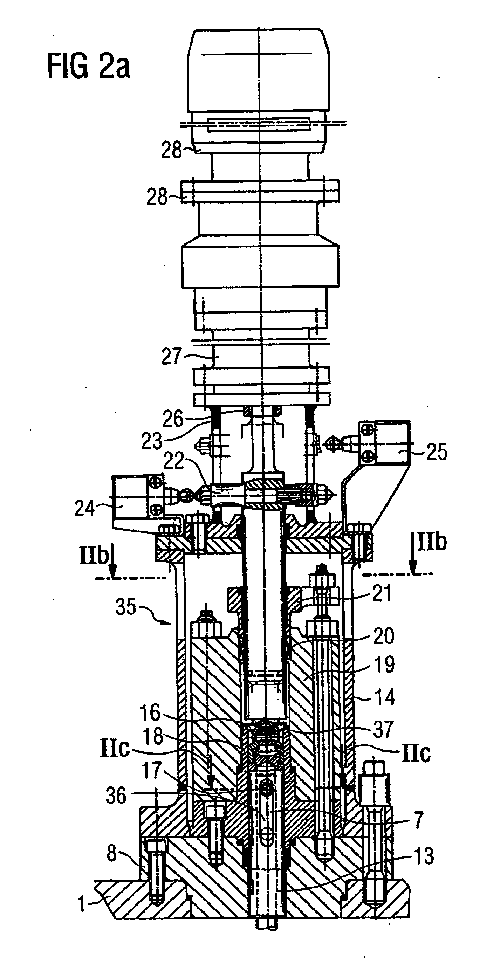

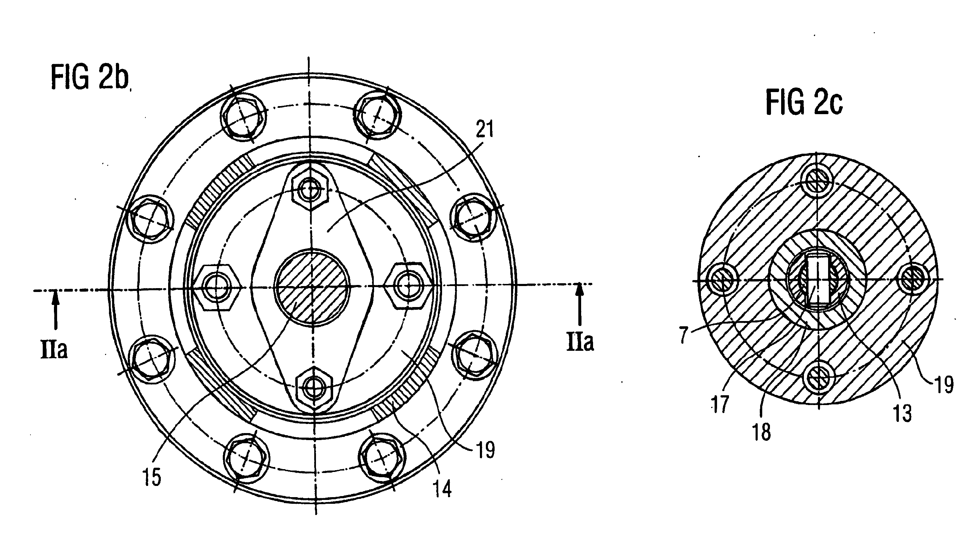

Die Ventilstange 7 wird nur benötigt, falls die Druckentlastungseinrichtung wie im dargestellten Ausführungsbeispiel mit einer An- und Abfahrüberbrückung ausgerüstet ist. Die im Folgenden kurz als Anfahrüberbrückung 35 bezeichnete An- und Abfahrüberbrückung hat die Aufgabe, die Hauptventil-Einsätze 33,34 auch bei niedrigen Systemdrücken, beispielsweise weniger als 10 bar in Geschlossen-Stellung zu halten. Die in FIG 1 nur ausschnittsweise sichtbare Anfahrüberbrückung 35 wird nachfolgend anhand der FIG 2a bis 2c näher erläutert. Die gesamte Anfahrüberbrückung 35 ist auf einen mit dem Ventilgehäuse 1 verbundenen Verschlussdeckel 8 aufgeschraubt und damit starr mit dem Ventilgehäuse 1 verbunden, wobei sich die Anfahrüberbrückung 35 etwa konzentrisch längs der Hauptventilachse HV1 erstreckt. Entsprechendes gilt für eine zweite Anfahrüberbrückung 35, welche längs einer Hauptventilachse HV2 des zweiten Hauptventil-Einsatzes 34 angeordnet ist. Die am Ventilkegel 5 angelenkte Ventilstange 7 ist mittels eines Querbolzens 17 in einer Schiebeführung 36 einer Zugstange 13 eingeschränkt verschieblich geführt. Die mit der Ventilstange 7 unter Beibehaltung einer mittels der Schiebeführung 36 gegebenen relativen Längsverschieblichkeit gekoppelte Zugstange 13 ist ihrerseits gekoppelt mit einer Spindel 15, an deren unterem, dem Ventilgehäuse 1 zugewandten Ende ein Kegel 16 mit Hinterstich angearbeitet ist.

Dieser Kegel 16 sitzt, wenn er sich in der dargestellten unteren Endlage befindet, auf einer starr mit dem Verschlussdeckel 8 und dem Ventilgehäuse 1 verbundenen Spindelsitzbuchse 18 auf. Durch den Sitz des Kegels 16 auf der Spindelsitzbuchse 18 ist eine erste Dichtvorrichtung 37 zwischen der Spindel 15 der Anfahrüberbrückung 35 und dem starr mit dem Ventilgehäuse 1 verbundenen Verschlussdeckel 8 einschließlich Spindelsitzbuchse 18 gegeben. Mit Ausnahme des An- und Abfahrbetriebs befindet sich die Spindel 15 stets in der dargestellten Position. Eine zweite unabhängig von der Position der Spindel 15 wirksame Dichtvorrichtung ist durch eine in einem Stopfbuchsträger 19 gehaltene Stopfbuchse 20 gebildet. Alternativ könnte an dieser Stelle auch eine Faltenbalgdichtung vorgesehen sein, welche konstruktiv aufwändiger ist, jedoch eine verbesserte Dichtfunktion bereitstellt. Unabhängig von der Art der zweiten Dichtvorrichtung 20 ist in nicht näher dargestellter Weise der zwischen dieser und der ersten Dichtvorrichtung 37 gebildete Raum an ein Niederdrucksystem angeschlossen.

Die Spindel 15 sowie der Stopfbuchsträger 19 einschließlich der Stopfbuchse 20 und einer Stopfbuchsbrille 21 sind weitgehend innerhalb einer Hauptventil-Laterne 14 angeordnet. An diese schließt sich eine Antriebs-Laterne 23 an, in welcher eine Drehmomentstütze 22 geführt ist, die ausschließlich eine Linearbewegung der Spindel 15 zulässt. Die etwa bolzenförmige Drehmomentstütze 22 ist dabei in Langlöchern der mit der Hauptventil-Laterne 14 verschraubten Antriebs-Laterne 23 geführt. Die Drehmomentstütze 22 dient zugleich als Teil einer Positionsanzeige der Anfahrüberbrükkung 35, welche des Weiteren einen unteren Endschalter 24 und einen oberen Endschalter 25 umfasst. Unabhängig hiervon ist eine weitere nicht dargestellte Positionsanzeige vorgesehen, welche die Position des Kolbens 4 und des Ventilkegels 5 anzeigt.

Zum Antrieb der Spindel 15 und der Zugstange 13 ist ein an sich gebräuchlicher Armaturenantrieb 28 vorgesehen, welcher eine Spindel-Mutter-Bremse 27 und eine Trapezspindel-Mutter 26 aufweist. Die Spindel-Mutter-Bremse 27 weist hierbei vorzugsweise einen Leerwinkel auf. Beim vollständigen Auf- oder Zufahren des Armaturenantriebs 28 wird ein nicht dargestelltes Federpaket vorgespannt. Dies erzeugt eine Kraftreserve bei der nachfolgenden Ingangsetzung des Armaturenantriebs 28 in entgegengesetzter Richtung.

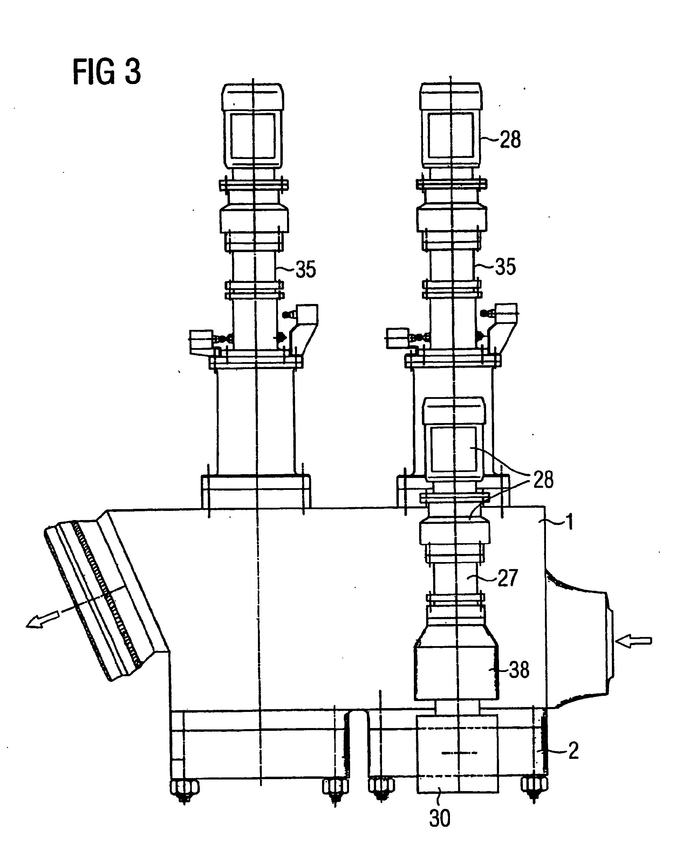

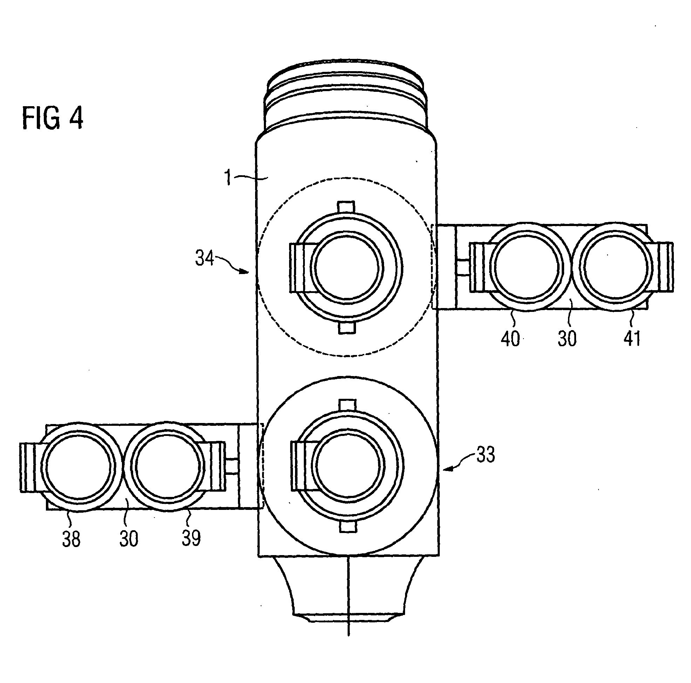

In den FIG 3 und 4 ist die Druckentlastungsventilanordnung nach FIG 1a bis 2c in Seitenansicht bzw. Draufsicht dargestellt. Zusätzlich zu den Anfahrüberbrückungen 35 sind zwei jeweils einem Hauptventil-Einsatz 33,34 zugeordnete Steuerventilblöcke 30 mit jeweils zwei Steuerventilen 38,39,40,41 sichtbar. Die Steuerventile 38,39,40,41 weisen ebenso wie die Anfahrüberbrückungen 35 jeweils einen Armaturenantrieb 28 auf. Insgesamt ist der Antrieb der Steuerventile 38,39,40,41 zumindest weitgehend analog dem Antrieb der Anfahrüberbrückungen 35 aufgebaut, so dass ein hoher Anteil an Gleichteilen gegeben ist. Unterschiedlich sind die Gewindesteigung der in der Spindel-Mutter-Bremse 27 angeordneten Trapez-Spindel-Mutter 26 sowie des zugehörigen Gewindes. Abweichend vom in FIG 4 dargestellten Aufbau der Druckentlastungsventilanordnung können in einer alternativen Ausgestaltung die Steuerventilblöcke 30 auch auf derselben Seite des Ventilgehäuses 1 an diesem angeflanscht sein. Die seitliche Anflanschung der Steuerventilblöcke 30 trägt in jedem Fall zu einem niedrigen Schwerpunkt der Druckentlastungsventilanordnung bei, wodurch ein günstiges Schwingungsverhalten, zusammenhängend mit einer geringen Kopflastigkeit, gegeben ist. Der Antrieb der Steuerventile 38,39,40,41 ist selbsthemmend ausgelegt, so dass ein zur Ansteuerung eines der Hauptventil-Einsätze 33,34 betätigtes, einen Hub von ca. 5 mm aufweisendes Steuerventil 38,39,40,41 selbst bei Ausfall der Energieversorgung die jeweilige Einstellung beibehält. Durch die Anordnung der Steuerventile 38,39,40,41 in den an das Ventilgehäuse 1 angeflanschten Steuerventilblöcken 30 ist ein hochdruckrohr-loser Aufbau der Steuerventilanordnung gegeben.

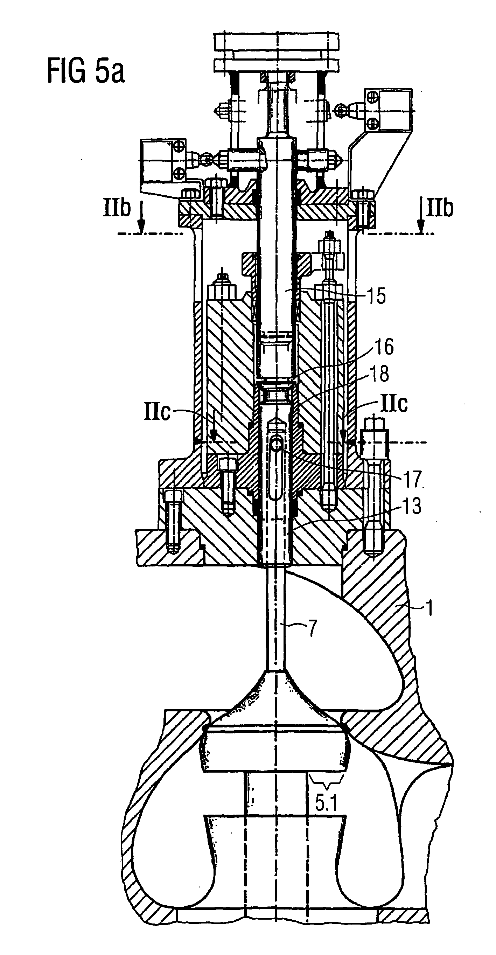

Die Betriebsweise der Druckentlastungsventilanordnung wird nachfolgend anhand der FIG 5a bis 5c näher erläutert. Die in FIG 5a dargestellte Anordnung entspricht dem bestimmungsgemäßen Betrieb mit geschlossenem Hauptventil-Einsatz 33,34. Der Ventilsitz 9 ist durch eine kreisförmige Teilfläche des Ventilkegels 5 geschlossen. Gleichzeitig befindet sich die Spindel 15 in der unteren Endposition, in welcher die Verschiebung des Ventilkegels 5 freigegeben ist. Durch die hydraulischen Kräfte, welche auf den Ventilkegel 5 (FIG 1) wirken, ist der Einströmraum 31 gegenüber dem Ausströmraum 32 abgedichtet.

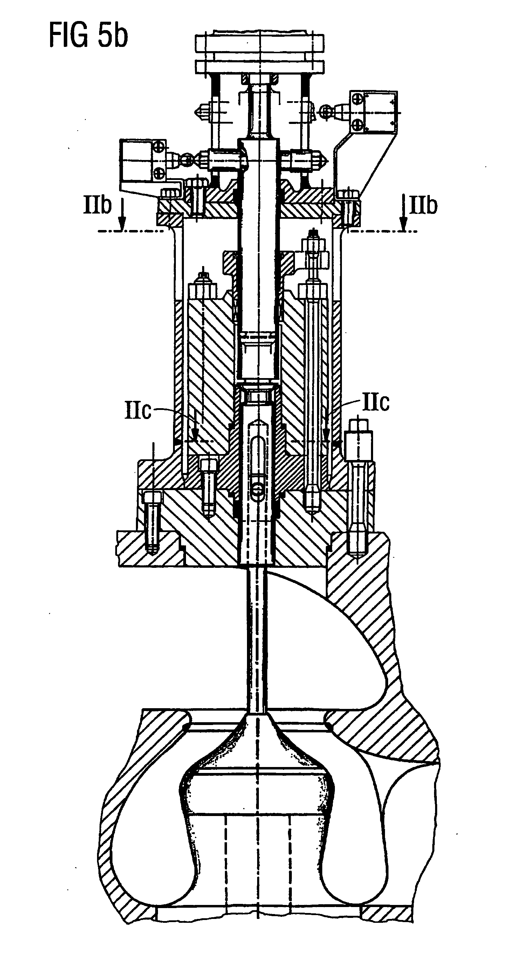

Im Anforderungsfall wird der untere Kolbenraum 2.1 der nach dem Entlastungsprinzip arbeitenden Druckentlastungsventilanordnung mittels der einem der Hauptventil-Einsätze 33,34 zugeordneten Steuerventile 38,39 beziehungsweise Steuerventile 40,41 druckentlastet. Hierbei sind die Steuerventile 38,39 bzw. Steuerventile 40,41 eines Steuerventilblocks 30 in Reihe geschaltet, d.h. ein Öffnen des Hauptventil-Einsatzes 33,34 kann ausschließlich erfolgen, wenn beide zugehörigen Steuerventile 38,39 bzw. 40,41 den Öffnungsvorgang einleiten. Ist einer der Hauptventil-Einsätze 33,34 nicht funktionsfähig, so werden die Steuerventile 40,41 bzw. 38,39 des dem zweiten Hauptventil-Einsatz 34,33 zugeordneten Steuerventilblocks 30 betätigt. Auf diese Weise ist sowohl ein Einzelfehler der Steuerventile 38,39,40,41 als auch ein Einzelfehler der Hauptventil-Einsätze 33,34 beherrscht. Ist der Ventilkegel 5, wie in FIG 5b dargestellt, vollständig abgesenkt, d.h. in vollständiger Offen-Position, so berührt eine ringförmige Angriffsfläche 5.1 des Ventilkegels 5 den Führungseinsatz 3. Damit wirkt auf den Ventilkegel 5 praktisch keine Kraft mehr, die diesen in Richtung der Geschlossen-Stellung drückt. Zugleich ist eine Abdichtung des Ventilkegels 5 zur unteren Kolbenstange 4.2 und zum Kolben 4 hin gebildet, d.h. der Hauptventil-Einsatz 33,34 rückdichtend ausgebildet. Die gesamte Stellzeit des Hauptventil-Einsatzes 33,34, d.h. der Übergang von der in FIG 5a gezeigten Position in die in FIG 5b gezeigte Position, beträgt ca. 5 bis 6 Sekunden. Nach dem Öffnen des Hauptventil-Einsatzes 33,34 verbleibt der Ventilkegel 5 unabhängig von der Funktionsfähigkeit der Steuerventile 38,39,40,41 in der in FIG 5b dargestellten Offen-Position. Die Beibehaltung dieser Offen-Position im Störfall wird unterstützt durch die Gewichtskraft der beweglichen Teile der Hauptventil-Einsatzes 33,34 sowie durch die auftretenden Reibungskräfte.

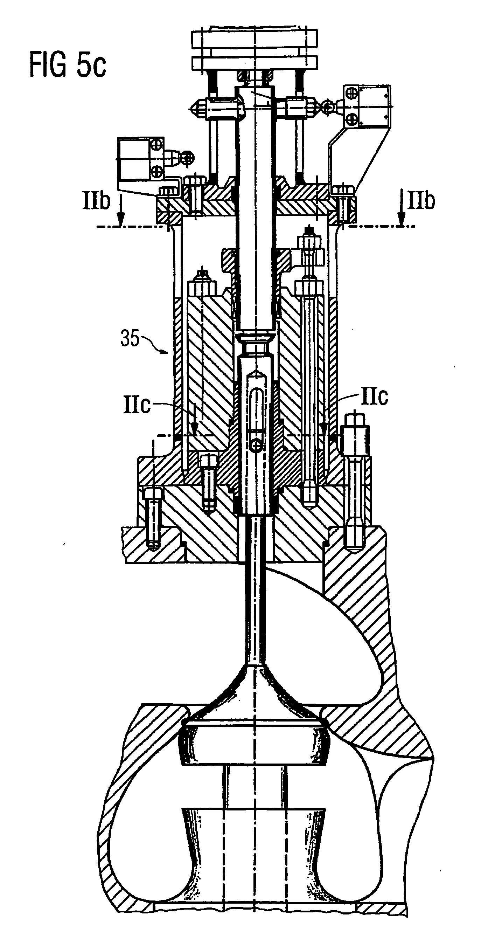

Ein anschließender Übergang in die Geschlossen-Position ist ausschließlich, wie anhand der FIG 5c ersichtlich, mit Hilfe der Anfahrüberbrückung 35 möglich. Der Querbolzen 17 befindet sich während der mittels der Anfahrüberbrückung 35 durchgeführten Schließbewegung des Hauptventil-Einsatzes 33,34 am unteren, d.h. dem Ventilsitz 9 zugewandten Ende der Schiebeführung 36. Mit Abschluss der Schließbewegung betätigt die Drehmomentstütze 22 den oberen Endschalter 25. In dieser Position verbleibt die Anfahrüberbrückung 35 bis zum Abschluss des Anfahrvorgangs. Anschließend wird, bei ausreichendem Druck des Mediums im Druckhalter, die Spindel 15 der Anfahrüberbrückung 35 in die in FIG 5a dargestellte Position zurück verlagert.

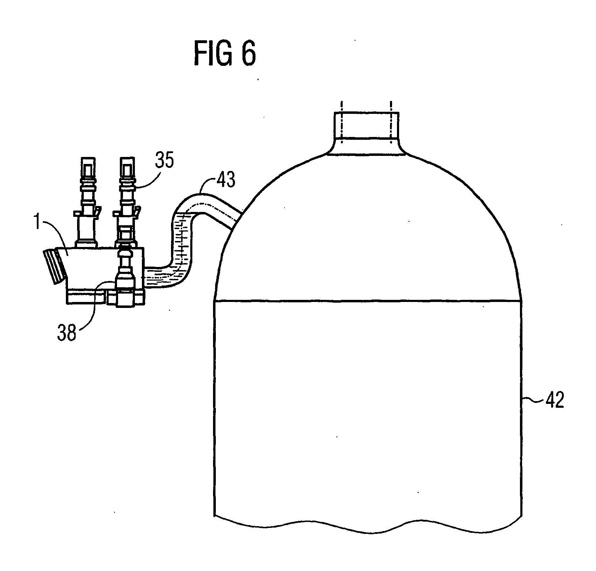

FIG 6 zeigt in stark vereinfachter Darstellung einen Druckhalter 42 eines Kernkraftwerkes. Zur Druckentlastung bei einem schweren Störfall mit Kernschmelze sind nicht dargestellte Sicherheitsventile am Druckhalter 42 vorgesehen, welche mittels ebenfalls nicht dargestellten Steuerventilen angesteuert werden. Auf diese Weise schmilzt die Reaktordruckbehälter-Kalotte, sofern andere Druckentlastungseinrichtungen versagen, im Niederdruckbereich des Primärkreislaufs durch, so dass unter Vermeidung des Hochdruck-Schmelzpfades der Kern aus dem Reaktordruckbehälter auf die hierfür vorgesehene Ausbreitungsfläche trifft. Die erfindungsgemäße Druckentlastungseinrichtung tritt bei diesem Szenario nicht in Aktion.

Die mit einer Anschlussleitung 43 an den Druckhalter 42 angeschlossene erfindungsgemäße Druckentlastungseinrichtung kommt, ausgehend von vorstehend beschriebenem Szenario, zum Einsatz, falls die am Druckhalter angeschlossenen nicht dargestelllten Sicherheitsventile nicht genügend Abblaseleistung zur Verfügung stellen, insbesondere eines oder mehrere der Sicherheitsventile oder zugehörigen Steuerventile nicht ansprechen. Um in diesem Fall den Druck im Druckhalter 42 im Niederdruckbereich, beispielsweise unter 20 bar, zu halten, wird einer der Hauptventil-Einsätze 33,34, angesteuert durch die zugehörigen Steuerventile 38,39 beziehungsweise die Steuerventile 40,41, geöffnet. Der zweite Hauptventil-Einsatz 34,33 wird lediglich angesteuert, falls der zuerst angesteuerte Hauptventil-Einsatz 33,34 oder die Ansteuerung durch die zugehörigen Steuerventile 38,39 bzw. 40,41 nicht funktionsfähig ist. Somit sind sowohl die Hauptventil-Einsätze 33,34 als auch die Steuerventile 38,39,40,41 redundant und den Einzelfehler beherrschend ausgelegt. Die Hauptventil-Einsätze 33,34 sind dabei passiv wirkende Bauteile ohne eigenen, etwa elektromechanischen Antrieb. Der Verzicht auf einen elektromechanischen Antrieb der Hauptventil-Einsätze 33,34 hat zusätzlich zu diesem sicherheitstechnischen Vorteil den weiteren Vorteil, dass schwere Antriebe oberhalb des Ventilgehäuses 1 entfallen. Vielmehr sind auf das Ventilgehäuse 1 lediglich die im Vergleich zu elektromechanischen Hauptventilantrieben relativ kleinen und leichten Anfahrüberbrückungen 35 aufgeschraubt. Damit ist eine zu starke Kopflastigkeit der Druckentlastungseinrichtung, die insbesondere bei Erdbeben relevant wäre, vermieden.

Dem Ventilgehäuse 1 ist eine Wasservorlage 44 vorgeschaltet, welche eine Beeinträchtigung der Funktion der Hauptventil-Einsätze 33,34 durch das Medium des Druckhalters 42 verhindert. Insbesondere wird vermieden, dass während des Abblasens von beispielsweise 500°C heißem Dampf aus einem oder mehreren der nicht dargestellten Sicherheitsventile des Druckhalters 42 die noch geschlossenen Hauptventil-Einsätze 33,34 beschädigt werden. Ist einer der beiden Hauptventil-Einsätze 33,34 geöffnet, so beträgt die Abblaseleistung der Druckentlastungseinrichtung nach nur ca. 5 bis 6 sec Stellzeit ca. 900 t Sattdampf pro Stunde bei 340°C. Das gleichzeitige Öffnen der beiden Hauptventil-Einsätze 33,34 ist nicht vorgesehen.

### Bezugszeichenliste

- 1: Ventilgehäuse
- 1.1: Vorschuhende
- 2: Gehäusedeckel
- 2.1: Kolbenraum
- 3: Zylinder
- 3.1: Ringraum
- 4: Kolben
- 4.1: Kolbenstange
- 4.2: Kolbenstange
- 5: Ventilkegel
- 5.1: Angriffsfläche
- 6: Strömungsspitze
- 7: Ventilstange
- 8: Verschlussdeckel
- 9: Ventilsitz
- 10: Lamellen
- 11: Führungsbuchse
- 12: Führungsbuchse
- 13: Zugstange
- 14: Hauptventil-Laterne
- 15: Spindel
- 16: Kegel
- 17: Querbolzen
- 18: Spindelsitzbuchse
- 19: Stopfbuchsträger
- 20: Stopfbuchse
- 21: Stopfbuchsbrille
- 22: Drehmomentstütze
- 23: Antriebs-Laterne
- 24: Endschalter
- 25: Endschalter
- 26: Trapezspindel-Mutter
- 27: Spindel-Mutter-Bremse
- 28: Armaturenantrieb
- 30: Steuerventilblock
- 31: Einströmraum
- 32: Ausströmraum
- 33: Hauptventil-Einsatz
- 34: Hauptventil-Einsatz
- 35: Anfahrüberbrückung
- 36: Schiebeführung
- 37: Dichtvorrichtung
- 38: Steuerventil
- 39: Steuerventil
- 40: Steuerventil
- 41: Steuerventil
- 42: Druckhalter
- 43: Anschlussleitung
- 44: Wasservorlage

- DN 300: Nennweite
- DN 130: Nennweite
- HV1: Hauptventilachse
- HV2: Hauptventilachse
- R1: Einströmrichtung
- R2: Ausströmrichtung

## Patentansprüche

1. Druckentlastungseinrichtung zum Einsatz an einem Druckhaltersystem eines Kraftwerks, insbesondere eines Kernkraftwerks,
• mit zwei in einem Ventilgehäuse (1) angeordneten, parallel geschalteten Hauptventil-Einsätzen (33,34),
• mit jeweils zwei zur Betätigung eines Hauptventil-Einsatzes (33,34) vorgesehenen Steuerventilen (38,39,40,41).

2. Druckentlastungseinrichtung nach Anspruch 1,
**dadurch gekennzeichnet, dass** jeweils zwei einem Hauptventil-Einsatz (33,34) zugeordnete Steuerventile (38,39,40,41) in einem mit dem Ventilgehäuse (1) verbundenen Steuerventilgehäuse (30) angeordnet sind.

3. Druckentlastungseinrichtung nach Anspruch 1 oder 2,
**dadurch gekennzeichnet, dass** die einem Hauptventil-Einsatz (33,34) zugeordneten Steuerventile (38,39,40,41) in Reihe geschaltet sind.

4. Druckentlastungseinrichtung nach einem der Ansprüche 1 bis 3, **dadurch gekennzeichnet, dass** zur Betätigung jedes Hauptventil-Einsatzes (33,34) jeweils ein mit dem Medium des Druckhaltersystems druckbeaufschlagbarer Kolben (4) vorgesehen ist.

5. Druckentlastungseinrichtung nach einem der Ansprüche 1 bis 4, **dadurch gekennzeichnet, dass** jedem Hauptventil-Einsatz (33,34) eine Anfahrüberbrückung (35) mit einer mit dem Hauptventil-Einsatz (33,34) gekoppelten Spindel (15) zugeordnet ist.

6. Druckentlastungseinrichtung nach Anspruch 4 und 5,
**dadurch gekennzeichnet, dass** die Anfahrüberbrückung (35) auf der dem Kolben (4) abgewandten Seite des Hauptventil-Einsatzes (33,34) angeordnet ist.

7. Druckentlastungseinrichtung nach Anspruch 5 oder 6,
**dadurch gekennzeichnet, dass** die Anfahrüberbrückung (35) eine Schiebeführung (36) aufweist, welche in einer ersten Position eine Betätigung des Hauptventil-Einsatzes (33,34) freigibt und in einer zweiten Position den Hauptventil-Einsatz (33,34) blockiert.

8. Druckentlastungseinrichtung nach Anspruch 7, **dadurch gekennzeichnet, dass** in der ersten Position der Schiebeführung (36) eine erste Dichtvorrichtung (37) zwischen einem starr mit dem Ventilgehäuse (1) verbundenen Gehäuseteil (8,18) und der Spindel (15) der Anfahrüberbrückung (35) geschlossen ist.

9. Druckentlastungseinrichtung nach Anspruch 8, **dadurch gekennzeichnet, dass** der ersten Dichtvorrichtung (37) eine zweite Dichtvorrichtung (20) zur Abdichtung der Spindel (15) der Anfahrüberbrückung (35) nachgeschaltet ist.

10. Druckentlastungseinrichtung nach einem der Ansprüche 5 bis 9, **dadurch gekennzeichnet, dass** die Spindel (15) der Anfahrüberbrückung (35) eine Verdrehsicherung (22) aufweist.

11. Druckentlastungseinrichtung nach einem der Ansprüche 5 bis 10, **gekennzeichnet durch** eine Positionsanzeige (22,24,25) der Anfahrüberbrückung (35).

12. Druckentlastungseinrichtung nach Anspruch 10 und 11,
**dadurch gekennzeichnet, dass** die Verdrehsicherung (22) einen Teil der Positionsanzeige (22,24,25) der Anfahrüberbrückung (35) bildet.

13. Druckentlastungseinrichtung nach einem der Ansprüche 5 bis 12, **dadurch gekennzeichnet, dass** die Anfahrüberbrückung (35) einen Antrieb (28) aufweist, dessen Aufbau dem Aufbau eines Antriebs (28) eines Steuerventils (38,39,40,41) zumindest weitgehend entspricht.

14. Druckentlastungseinrichtung nach einem der Ansprüche 1 bis 13, **dadurch gekennzeichnet, dass** die Hauptventil-Einsätze (33,34) zumindest annähernd parallel zueinander angeordnet sind.

15. Druckentlastungseinrichtung nach einem der Ansprüche 1 bis 14, **dadurch durch gekennzeichnet**, **dass** die Hauptventil-Einsätze (33,34) einen gemeinsamen Einströmraum (31) von einem gemeinsamen Ausströmraum (32) innerhalb des Ventilgehäuses (1) trennen.

16. Druckentlastungseinrichtung nach Anspruch 15, **dadurch gekennzeichnet, dass** eine Einströmrichtung (R1) im Einströmraum (31) zumindest annähernd einer Ausströmrichtung (R2) im Ausströmraum (32) entspricht.

17. Druckentlastungseinrichtung nach einem der Ansprüche 1 bis 16, **dadurch durch gekennzeichnet**, **dass** der Hauptventil-Einsatz (33,34) rückdichtend ausgebildet ist.

18. Druckentlastungseinrichtung nach einem der Ansprüche 1 bis 17, **dadurch gekennzeichnet, dass** der Hauptventil-Einsatz (33,34) eine in eine Öffnung eines Ventilkegels (5) eingesetzte ringförmige Lamelle (10) umfasst.

19. Druckentlastungseinrichtung nach einem der Ansprüche 1 bis 18, **gekennzeichnet durch** eine den Hauptventil-Einsätzen (33,34) vorgeschaltete Wasservorlage (44).

## Claims

1. Pressure-relief device for use in a pressure-maintaining system of a power plant, in particular a nuclear power plant, having two main-valve cores (33,34) connected in parallel, arranged in a valve chamber (1), each of them having two control valves (38,39,40,41) provided for operating a main-valve core (33,34).

2. Pressure-relief device according to claim 1,
**characterized in that** two control valves (38,39,40,41) each, allocated to a main-valve core (33,34), are arranged in a control-valve chamber (30) connected with the valve chamber (1).

3. Pressure-relief device according to claim 1 or 2,
**characterized in that** the control valves (38,39,40,41) allocated to a main-valve core (33,34) are connected in series.

4. Pressure-relief device according to any of claims 1 to 3,
**characterized in that** one piston (4) each, which can be pressurized with the medium of the pressure-maintaining system, is provided for operating each of the main-valve cores (33,34).

5. Pressure-relief device according to any of claims 1 to 4,
**characterized in that** a starting jumper (35) having a spindle (15) coupled with the main-valve core (33,34) is allocated to each main-valve core (33,34).

6. Pressure-relief device according to claims 4 and 5,
**characterized in that** the starting jumper (35) is arranged on the side of the piston (4) facing away from the main-valve core (33,34).

7. Pressure-relief device according to claim 5 or 6,
**characterized in that** the starting jumper (35) includes a sliding guide (36) which in a first position releases an operation of the main-valve core (33,34) and in a second position blocks the main-valve core (33,34).

8. Pressure-relief device according to claim 7,
**characterized in that** in the first position of the sliding guide (36), a first sealing device (37) between a chamber part (8,18), rigidly connected with the valve chamber (1), and the spindle (15) of the starting jumper (35) is closed.

9. Pressure-relief device according to claim 8,
**characterized in that** a second sealing device (20) for sealing the spindle (15) of the starting jumper (35) is connected downstream of the first sealing device (37).

10. Pressure-relief device according to any of claims 5 to 9,
**characterized in that** the spindle (15) of the starting jumper (35) includes an antitwist protection device (22).

11. Pressure-relief device according to any of claims 5 to 10,
**characterized by** a position indicator (22,24,25) of the starting jumper (35).

12. Pressure-relief device according to claims 10 and 11,
**characterized in that** the antitwist protection device (22) forms a part of the position indicator (22,24,25) of the starting jumper (35).

13. Pressure-relief device according to any of claims 5 to 12,
**characterized in that** the starting jumper (35) includes a drive (28) whose structure corresponds, at least to a large extent, to the structure of a drive (28) of a control valve (38,39,40,41).

14. Pressure-relief device according to any of claims 1 to 13,
**characterized in that** the main-valve cores (33,34) are arranged at least approximately in parallel relative to each other.

15. Pressure-relief device according to any of claims 1 to 14,
**characterized in that** the main-valve cores (33,34) separate a common inflow chamber (31) from a common outflow chamber (32) inside the valve chamber (1).

16. Pressure-relief device according to claim 15,
**characterized in that** an inflow direction (R1) in the inflow chamber (31) corresponds at least approximately to an outflow direction (R2) in the outflow chamber.

17. Pressure-relief device according to any of claims 1 to 16,
**characterized in that** the main-valve core (33,34) is designed in a backsealing manner.

18. Pressure-relief device according to any of claims 1 to 17,
**characterized in that** the main-valve core (33,34) includes a ring-shaped lamella (10) inserted in an opening of a valve cone (5).

19. Pressure-relief device according to claim 1 to 18,
**characterized by** a hydraulic seal (44) connected upstream of the main-valve cores (33,34).

## Revendications

1. Dispositif de décompression pour utilisation dans un système de maintien de la pression d'une centrale électrique, en particular d'une centrale nucléaire, ayant deux garnitures de soupape principale (33,34) connectées en parallèle, arrangées dans une chambre de soupape (1), chacune d'elles ayant deux soupapes-pilote (38,39,40,41) prévues pour commander une garniture de soupape principale (33,34).

2. Dispositif de décompression selon la revendication 1,
**caractérisé en ce que** deux soupapes-pilote (38,39,40,41) à chaque fois, attribuées à une garniture de soupape principale (33,34), sont arrangées dans une chambre de soupape-pilote (30) connectée avec la chambre de soupape (1).

3. Dispositif de décompression selon la revendication 1 ou 2,
**caractérisé en ce que** les soupapes-pilote (38,39,40,41) attribuées à une garniture de soupape principale (33,34) sont connectées en série.

4. Dispositif de décompression selon l'une quelconque des revendications 1 à 3,
**caractérisé en ce qu**'un piston (4), qui peut être pressurisé par le milieu du système de maintien de la pression, est prévu à chaque fois pour commander chacune des garnitures de soupape principale (33,34).

5. Dispositif de décompression selon l'une quelconque des revendications 1 à 4,
**caractérisé en ce qu'**un pontage de démarrage (35) ayant une broche (15) couplé à la garniture de soupape principale (33,34) est attribué à chaque garniture de soupape principale (33,34).

6. Dispositif de décompression selon les revendications 4 et 5,
**caractérisé en ce que** le pontage de démarrage (35) est arrangé du côté du piston (4) opposé à la garniture de soupape principale (33,34).

7. Dispositif de décompression selon la revendication 5 ou 6,
**caractérisé en ce que** le pontage de démarrage (35) comprend un dispositif de guidage glissant (36) qui dans une première position relâche une commande de la garniture de soupape principale (33,34) et dans une seconde position bloque la garniture de soupape principale (33,34).

8. Dispositif de décompression selon la revendication 7,
**caractérisé en ce que**, dans la première position du dispositif de guidage glissant (36), un premier dispositif d'étanchéité (37) entre une partie de la chambre (8,18), connectée de façon rigide avec la chambre de soupape (1), et la broche (15) du pontage de démarrage (35) est fermée.

9. Dispositif de décompression selon la revendication 8,
**caractérisé en ce qu'**un second dispositif d'étanchéité (20) pour étancher la broche (15) du pontage de démarrage (35) est connecté en aval du premier dispositif d'étanchéité (37).

10. Dispositif de décompression selon l'une quelconque des revendications 5 à 9,
**caractérisé en ce que** la broche (15) du pontage de démarrage (35) comprend un dispositif de protection contre la torsion (22).

11. Dispositif de décompression selon l'une quelconque des revendications 5 à 10,
**caractérisé par** un indicateur de position (22,24,25) du pontage de démarrage (35).

12. Dispositif de décompression selon les revendications 10 et 11,
**caractérisé en ce que** le dispositif de protection contre la torsion (22) constitue une partie de l'indicateur de position (22,24,25) du pontage de démarrage (35).

13. Dispositif de décompression selon l'une quelconque des revendications 5 à 12,
**caractérisé en ce que** le pontage de démarrage (35) comprend un entraînement (28) dont la structure correspond, au moins largement, à la structure d'un entraînement (28) d'une soupape-pilote (38,39,40,41).

14. Dispositif de décompression selon l'une quelconque des revendications 1 à 13,
**caractérisé en ce que** les garnitures de soupape principale (33,34) sont arrangées au moins approximativement en parallèle l'une à l'autre.

15. Dispositif de décompression selon l'une quelconque des revendications 1 à 14,
**caractérisé en ce que** les garnitures de soupape principale (33,34) séparent une chambre d'afflux (31) commune d'une chambre d'écoulement (32) commune à l'intérieur de la chambre de soupape (1).

16. Dispositif de décompression selon la revendication 15,
**caractérisé en ce qu'**une direction d'afflux (R1) dans la chambre d'afflux (31) correspond au moins approximativement à une direction d'écoulement (R2) dans la chambre d'écoulement.

17. Dispositif de décompression selon l'une quelconque des revendications 1 à 16,
**caractérisé en ce que** la garniture de soupape principale (33,34) est formée pour un étanchement en retour.

18. Dispositif de décompression selon l'une quelconque des revendications 1 à 17,
**caractérisé en ce que** la garniture de soupape principale (33,34) comprend une lamelle (10) en forme d'anneau, insérée dans une ouverture d'un cône de soupape (5).

19. Dispositif de décompression selon la revendication 1 à 18,
**caractérisé par** un joint hydraulique (44) connecté en amont des garnitures de soupape principale (33,34).
